# EUROPEAN PATENT APPLICATION

(11) **EP 1 724 223 A1**
(43) Date of publication of application: **22.11.2006**
(21) Application number: 05010011.4
(22) Date of filing: 09.05.2005
(51) Int. Cl.: B65H 75/40, B65H 75/44, F16L 3/01

(54) **Hose reel assembly**

(71) Applicant: Su, Cheng-Wen, Changhwa City Changhwa Hsien (TW)
(72) Inventor: Su, Cheng-Wen, Changhwa City Changhwa Hsien (TW)
(74) Representative: Casalonga, Axel

(57) **Abstract**

A dual functional water pipe assembly has two water pipes(A, B), a body (10) having two side recesses (12) and a through hole (13), two plates (20) rotatably mounted on side recesses (12) and having a holder (21) formed on the inner surface of each plate (20) for a respective one of the water pipes (A, B) to be reeled thereon, and a connecting device (30) for connection with a water outlet.

## Description

The present invention relates to water pipe assembly, especially to a dual functional water pipe assembly.

A water pipe assembly is for delivering water, especially to water lawns etc., and a conventional water pipe assembly has a holder and a water pipe. The water pipe is reeled inside the holder and can be pulled out from one side only. Such kind of the conventional water pipe assembly will limit a distance that water can reach.

The dual functional water pipe assembly in accordance with the present invention obviates or mitigates the aforementioned problems.

The primary objective of the present invention is to provide a dual functional water pipe assembly that does not limit a sprinkle range.

To achieve the objective, the dual functional water pipe assembly in accordance with the present invention has two water pipes, a body having two side recesses and a through hole, two plates rotatably mounted on side recesses and having a holder formed on the inner surface of each plate for one of the water pipes to be reeled on, and a connecting device for delivering water.

Other objectives, advantages and novel features of the invention will become more apparent from the following detailed description when taken in conjunction with the accompanying drawings.
Fig. 1 is an exploded perspective view of a dual functional water pipe assembly in accordance with the present invention without water pipes mounted inside;
Fig. 2 is a perspective view of the dual functional water pipe assembly in Fig. 1 without water pipes mounted inside;
Fig. 3 is a side plan view in partial section of the dual functional water pipe assembly in Fig. 1 with water pipes mounted inside;
Fig. 4 is a partial enlarged plan view in partial section of the dual functional water assembly in Fig. 1 with a water pipe mounted inside;
Fig. 5 is a side plan view in partial section of the dual functional water pipe assembly in Fig. 1 when the water pipe is connected to a sprinkler and the sprinkler is mounted on the dual functional water pipe assembly with a fixing rod; and
Fig. 6 is a side plan view in partial section of the dual functional water pipe assembly in Fig. 1 when the water pipe is connected to a sprinkler and the sprinkler is mounted on the dual functional water pipe assembly.

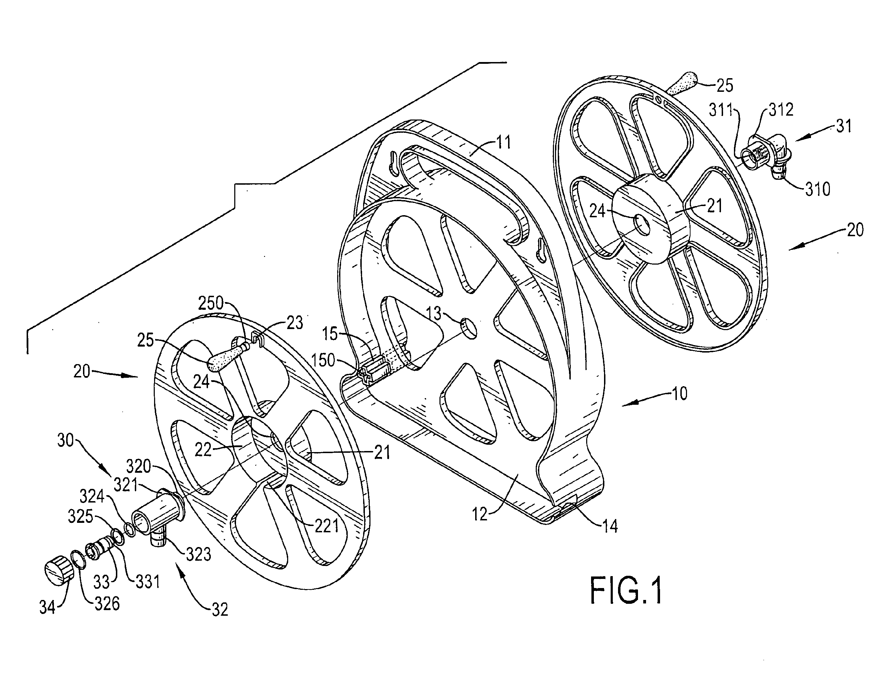

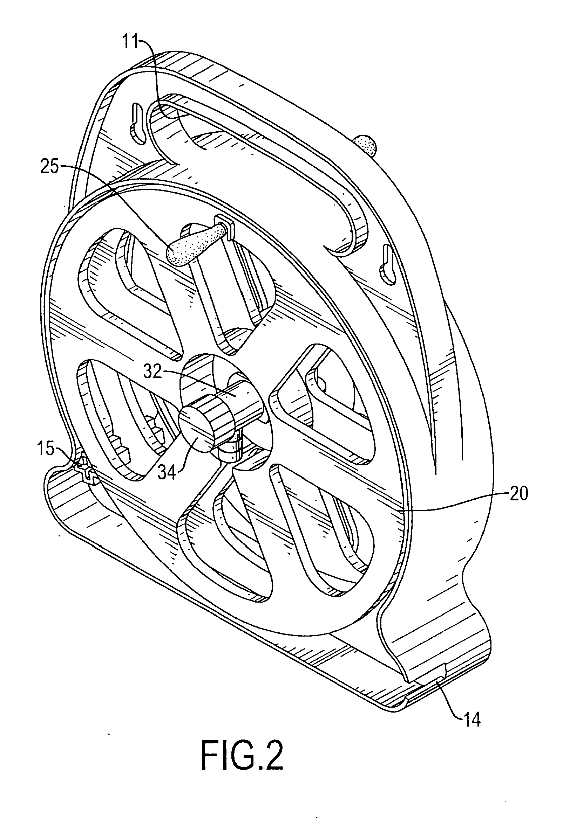

With reference to Figs. 1 to 3, a dual functional water pipe assembly in accordance with the present invention has a body (10), two plates (20), a connecting device (30) and two water pipes (A, B).

The water pipes (A, B) both have an input end and an output end.

The body (10) has a front surface, a rear surface, two side surfaces, a top edge, a bottom, a center, an optional hand grip (11), two keyholes, two side recesses (12), a through hole (13), two slots (14) and two optional holding posts (15). The hand grip (11) is formed on the top edge of the body (10) so that the device may be easily carried. Two keyholes are defined in the handle (11) respectively at either side of the handle (11), so that the pipe assembly can be hung on an object with hangers engaging with the keyholes. The side recesses (12) are respectively defined in the front surface and the rear surface. The through hole (13) is defined through the body (10) and in a preferred embodiment, the through hole is defined at the center of the body (10). The two slots (14) are respectively defined in side surfaces near the bottom for water pipes (A, B) to extend therethrough. The holding posts (15) are respectively formed on the front surface and the rear surface. In a preferred embodiment, the holding posts (15) are formed near the side surfaces and respectively have a holding hole (150).

The plates (20) are rotatably mounted on the front surface and the rear surface of the body (10). Each plate (20) has an inner surface, an outer surface, a center, a side edge, a holder (21), a recess (22), an optional slot (221), an optional retaining hole (23), a mounting hole (24) and a handle (25). Each inner surface of the plate (20) faces to the corresponding side recess (12) in the body (10). The holder (21) is formed on the inner surface of the plate (20) at the center as a cylinder, and the water pipes (A, B) respectively reel on the holders (21) on the two plates (20). The recess (22) is defined in the outer surface of the plate (10) and corresponds to the holder (21) on the inner surface. The slot (221) is defined in the holder (21) and communicating the recess (22) for each water pipe (A, B) to extend therethrough. The retaining hole (23) is defined on the outer surface of the plate (20) near the side edge. The mounting hole (24) is defined through the center of the plate (20) and corresponds to the through hole (13) in the body (10). The mounting hole (24) is in communication with the slot (221). In a preferred embodiment, the mounting hole (24) is defined through the holder (21) and the recess (22) at the center of the plate (20). The handle (25) is mounted on the plate (20). In a preferred embodiment, the handle (25) is pivotally mounted inside the retaining hole (23) and has a pivot end (250). The pivot end (250) is mounted inside the retaining hole (25).

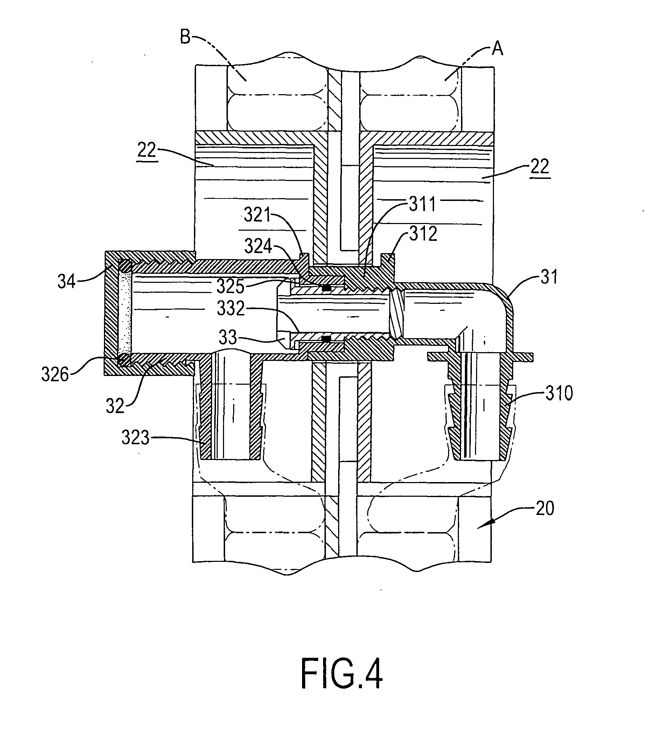

With further reference to Fig. 4, the connecting device (30) has an input drain (31), an output drain (32) and an optional cover (34). The input drain (31) is mounted inside the recess (22) of one of the plates (20) and is formed as an inverted L-shape. The input drain (31) has an outer surface, an input end (310), a threaded end (311) and an optional flange (312). The input end (310) is connected to the output end of the water pipe (A). The flange (312) is radially formed on the outer surface of the input drain (31) and locates between the input end (310) and the threaded end (311). The output drain (32) is mounted on the outer surface of the other plate (20) and connects with the input drain (31). The output drain (32) may be formed as a T-shape and has an outer surface, a connecting end (320), an optional flange (321), an optional sealing end (322), an output end (323), an O ring (324), a first washer (325), a second washer (326) and a threaded body (33). The flange (321) is formed on the outer surface of the output drain (32) and locates between the connecting end (320) and the sealing end (322). The flanges (312, 321) abut the outer surface of the plates (20) and retain the connecting device (30) in place. The output end (323) is connected to the input end of the water pipe (B). The O ring (324) is mounted on the threaded body (33). The first washer (325) is mounted between the output drain (32) and the threaded body (33). The threaded body (33) is received inside the output drain (32), extends from the connecting end (320) and has an outer threaded end (331), an outer end and a channel (332). The outer threaded end (331) is screwed into the threaded end (311) of the input drain (31). The channel (332) is defined inside the threaded body (33) and communicates with the input drain (31) and the output drain (32). The cover (34) is screwed on the sealing end (322) of the output drain (32). The second washer (326) is mounted between the output drain (32) and the cover (34).

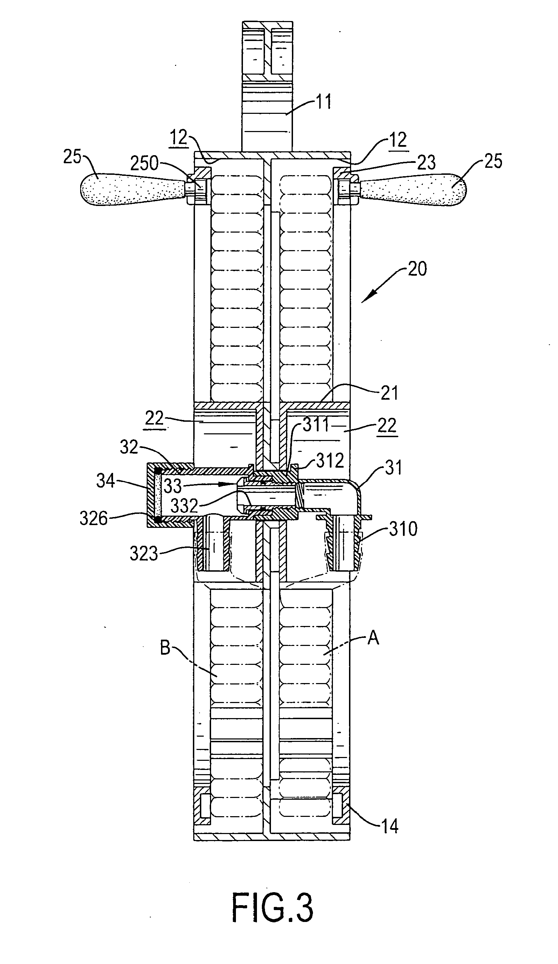

Still with reference to figs. 3 and 4, when the dual functional water pipe assembly in accordance with the present invention is not in use, the water pipes (A, B) are respectively reeled on the holders (21) of the plates (20) and received inside the body (10).

When the dual functional water pipe assembly in accordance with the present invention is in use, the input end of the water pipe (A) connects to a faucet, then water delivers from water pipe (A) to the input drain (31), the output drain (32) and to the water pipe (B).

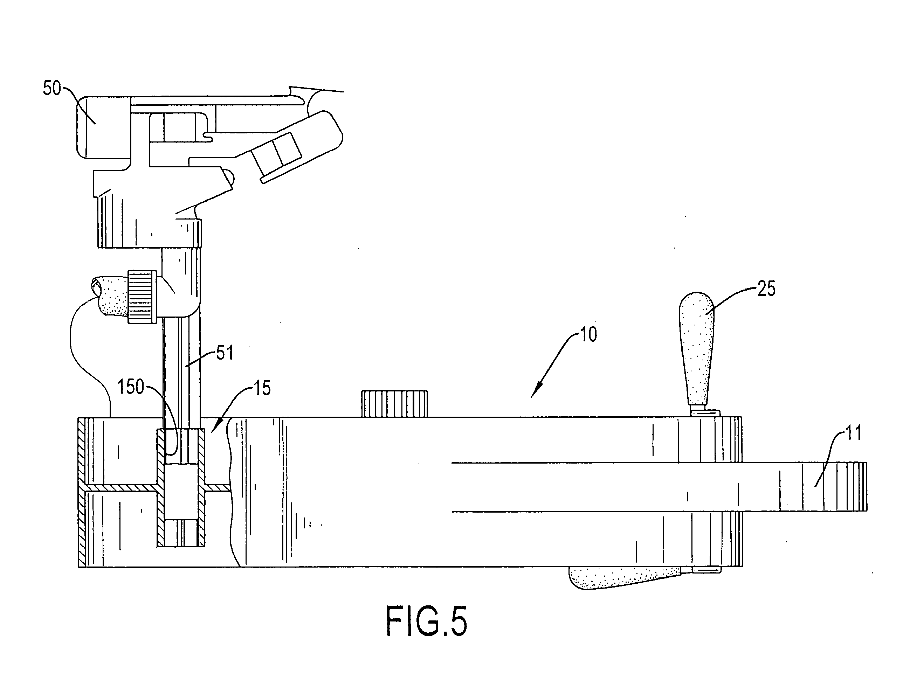

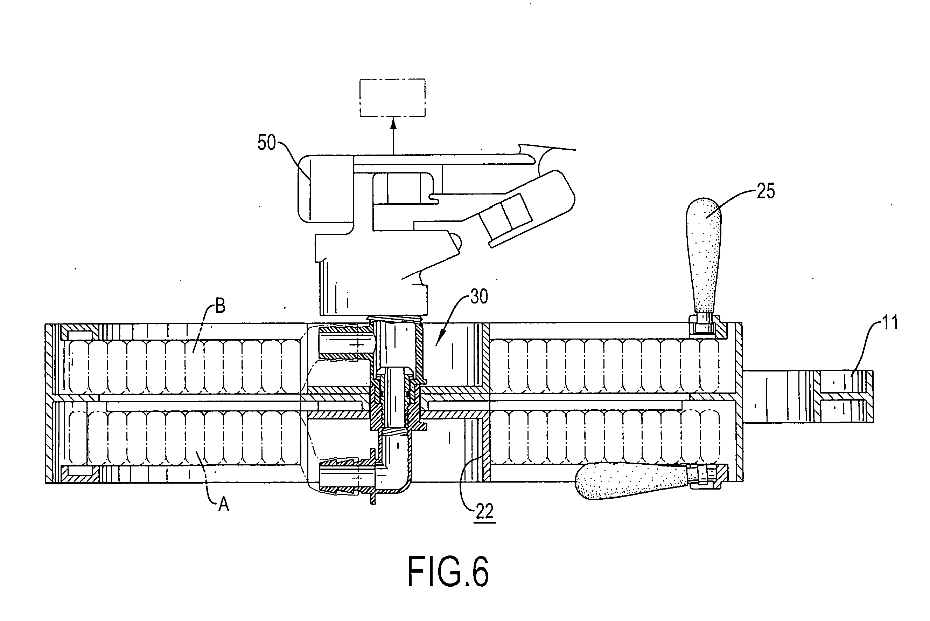

With reference to Figs. 5 and 6, the output end of the water pipe (B) can further connect to a sprinkler (50), so the sprinkler (50) will not be limited to one place. The sprinkler (50) may further comprise a leg (51) adapted for mounted in the holding hole (150).

The dual functional water pipe assembly in accordance with the present invention has the following advantages.
1. Because two water pipes (A, B) reeled inside the body (10), the water pipes (A, B) of the dual functional water pipe assembly can extend far and will not limit a distance water can be delivered.
2. The dual functional water pipe assembly can connect a sprinkler directly, so the sprinkler can be used in any desired place even where is a concrete ground.

The invention may be varied in many ways by a person skilled in the art. Such variations are not to be regarded as a departure from the spirit and scope of the invention, and all such modifications are intended to be included within the scope of the following claims.

## Claims

1. A dual functional water pipe assembly having
two water pipes (A, B) both having an input end and an output end, a body (10) having
a front surface,
a rear surface,
two side surfaces,
a top edge,
a bottom,
a center,
two side recesses (12), the side recesses (12) respectively defined in the front surface and the rear surface,
a through hole (13) defined through the body (10),
two slots (14), the slots (14)respectively defined in side surfaces near the bottom and for a respective one of the water pipes (A, B) to extend therethrough,
two plates (20) rotatably and respectively mounted on the front surface and the rear surface of the body (10) and each plate (20) having
an inner surface facing to one of the side recesses (12),
an outer surface,
a center,
a side edge,
a holder (21) formed on the inner surface of the plate (20) at the center for a respective one of the water pipes (A, B) to be reelable thereon,
a recess (22) defined in the outer surface of the plate (20) and corresponding to the holder (21) on the inner surface,
a mounting hole (24) defined through the center of the plate (20) and corresponding to the through hole (13) in the body (10), and
a handle (25) mounted on the plate (20),
a connecting device (30) having
an input drain (31) mounted inside the recess (22) of a respective one of the plates (20) and having
an outer surface,
an input end (310) connected to the output end of a respective one of the water pipes(A, B), and
a threaded end (311), and
an output drain (32) mounted on the outer surface of the other plate (20) and connected to the input drain (31) and having
an outer surface,
a connecting end (320),
an output end (323) connected to the input end of a respective one of the water pipes (A, B), and
a threaded body (33) received inside the output drain (32) and extended from the connecting end (320), having an outer threaded end (331), an outer end and a channel (332) communicating to the output drain (32).

2. The dual functional water pipe assembly as claimed in claim 1, wherein the output drain (32) of the connecting device (30) is formed as a T-shape and has a seal end(322), and the connecting device (30) further comprises a cover (34) screwed on the sealing end (322) of the output drain (32).

3. The dual functional water pipe assembly as claimed in claim 1, wherein the threaded body (33) of the connecting device (30) further comprises an O-ring (324) mounted on the threaded body (33), a first washer (325) mounted between the output drain (32) and the threaded body (33), and a second washer (326) mounted between the output drain (32) and the cover (34).

4. The dual functional water pipe assembly as claimed in claim 3, wherein the body (10) further comprises a hand grip (11) formed on the top edge.

5. The dual functional water pipe assembly as claimed in claim 4, wherein each plate (20) further comprises a slot (221) defined in the holder (21) of the plate (20) and communicating with the recess (22) for the respective water pipe (A, B) to extend therethrough.

6. The dual functional water pipe assembly as claimed in claim 5, wherein each plate (20) further comprises a retaining hole (23) defined in the outer surface of the plate (20) near the side edge, and each handle (25) has a pivot end (250) and is pivotally mounted in the retaining hole (23) of a corresponding plate (20).

7. The dual functional water pipe assembly as claimed in claim 6, wherein the input drain (31) of the connecting device (30) further comprises a flange (312) radially formed on the outer surface of the input drain (31) and located between the input end (310) and the threaded end (311), and
the output drain (32) of the connecting device (30) further comprises a flange (321) formed on the outer surface of the output drain (32) and located between the connecting end (320)and the sealing end (322), wherein the flanges (312, 321) respectively abut the outer surfaces of the plates (20) and keep the connecting device (30) in place.

8. The dual functional water pipe assembly as claimed in claim 1, wherein the body (10) further comprises a hand grip (11) formed on the top edge.

9. The dual functional water pipe assembly as claimed in claim 1, wherein each plate (20) further comprises a slot (221) defined in the holder (21) and communicating with the recess (22) of the plate (20) for the respective water pipe (A, B) to extend therethrough.
